# EUROPÄISCHE PATENTSCHRIFT

(11) **EP 2 252 719 B1**
(45) Veröffentlichungstag und Bekanntmachung des Hinweises auf die Patenterteilung: **15.07.2020**
(21) Anmeldenummer: 08872086.7
(22) Anmeldetag: 25.11.2008
(51) Int. Cl.: C23C 10/02, C23C 10/28, C23C 10/36, B23K 101/00, B23K 101/34, B23K 103/20, B23K 103/22, B23K 103/24

(54) **KAROSSERIEBAUTEILE IN METALL-HYBRIDBAUWEISE UND DEREN HERSTELLUNGSVERFAHREN**
VEHICLE BODY COMPONENTS WITH A METAL HYBRID CONSTRUCTION AND PRODUCTION METHODS THEREOF
ÉLÉMENTS DE CARROSSERIE DE CONSTRUCTION HYBRIDE MÉTALLIQUE ET LEUR PROCÉDÉ DE FABRICATION

(30) Priorität: 07.02.2008 DE 102008007977
(43) Veröffentlichungstag der Anmeldung: 24.11.2010
(73) Patentinhaber: Thermission AG, 6390 Engelberg / OW (CH)
(72) Erfinder: FUETTERER, Michael, 71157 Hildrizhausen (DE); HONSEL, Alfons, 71120 Grafenau (DE); BENGTSSON, Asa, 70536 Stuttgart (DE); LEVINSKI, Leonid, B-1150 Brüssel (BE); SAMOILOV, Victor, B-1150 Brussels (BE); BRODT, Martin, 71263 Weil der Stadt (DE); IVLEV, Alexandree, B-7943 Gages (BE); KIREEV, Igor, B-1180 Uccle (BE)
(74) Vertreter: LKGLOBAL Lorenz & Kopf PartG mbB Patentanwälte
(86) Internationale Anmeldenummer: PCT/EP2008/009959
(87) Internationale Veröffentlichungsnummer: WO 2009/097882

(56) Entgegenhaltungen:
- WO-A-03/000948
- WO-A1-2007/097378
- GB-A- 131 047
- GB-A- 498 371
- JP-A- 55 042 181
- US-A1- 2002 069 940
- "Phosphatieren: Korrosions-Stopp für alle Industrie-Metalle" INNOVATIONS REPORT, [Online] 13. Oktober 2006 (2006-10-13), XP002519274 Gefunden im Internet: URL:http://www.innovations-report.de/html/ berichte/verfahrenstechnologie/bericht-720 48.html> [gefunden am 2009-03-13]
- LYAKHOVICH L S ET AL: "Diffusion zinc-plating of aluminum alloys", METAL SCIENCE AND HEAT TREATMENT, vol. 27, no. 6, June 1985 (1985-06), pages 468-471, XP055103613, Belorussian Polytechnic Institute [SU] ISSN: 0026-0673, DOI: 10.1007/BF00693293

## Beschreibung

Die Erfindung betrifft ein Verfahren zur Herstellung von Zink-beschichteten Bauteilen insbesondere aus Leichtmetalllegierungen wie AI-, Ti-, oder Mg-Legierungen mittels eines Thermodiffusionsverfahrens sowie Karosseriebauteile in Metall-Hybrid-oder Mischbauweise aus Stahl und Zn-Thermodiffusionsbeschichtetem Leichtmetall mit verbessertem Korrosionsschutz.

Im Fahrzeugbau werden unter dem Aspekt des Leichtbaus in der Karosserie vermehrt hybride Bauweisen verwendet. Typische Varianten sind dabei Karosserie-Au-ßenhautteile aus einem metallischen Leichtbauwerkstoff (z. B. Aluminiumlegierung), gegebenenfalls mit Verstärkungselementen aus Stahlwerkstoff, auf Stahlrahmenkonstruktionen. Alternativ kann beispielsweise wie in der DE 198 24 932 A1 beschrieben, das Außenhautteil aus einem Stahlblech bestehen, während das Verstärkungselement aus einer Leichtmetalllegierung hergestellt ist. Ebenso kann auch die Rahmenkonstruktion (bspw. Space frame) Mischbauweise ausgestaltet werden. Die DE 10 2004 004 386 liefert Beispiele für die Mischbauweise für Beplankungsteile als Karosseriebauteil.

Für den Leichtbau werden dabei Leichtmetallwerkstoffe, insbesondere Al-Legierungen eingesetzt, die deutlich geringere Korrosionsraten zeigen als Stähle. Eine spezielle Korrosionsschutzbeschichtung ist hier für die Leichtmetalle in der Regel nicht erforderlich. Im Materialverbund aus den elektrochemisch unedlen Lichtmetalllegierungen mit den im Karosseriebau üblichen niedrig legierten Stählen ergeben sich in der Praxis jedoch Korrosionsprobleme, die durch die verschiedenen elektrochemischen Potentiale der Werkstoffe begründet sind. Kontakt- bzw. Fügestellen zwischen den unterschiedlichen Werkstoffen müssen daher aufwändig vor Kontaktkorrosion geschützt werden. Dies gilt insbesondere bei Kraftfahrzeugkarosserien, die typischerweise dem Zutritt korrosiver wässriger Medien ausgesetzt sind. Typische Maßnahme im Fahrzeugbau ist dabei beispielsweise die Nahtabdichtung, bei der eine spezielle Kunststoffdichtmasse auf die Fügenaht zwischen den beiden Werkstoffen aufgebracht wird.

Häufig muss beim Fügen auf das Verkleben zurückgegriffen werden, um den direkten elektrochemischen Kontakt zwischen den unterschiedlichen Werkstoffen zu verhindern. Dies ist beispielsweise in der DE 19939977 A1 beschrieben. Die WO 2007/097 378 offenbart Aluminium-Stahl-Verbundprodukte und insbesondere eine Punktschweißverbindung von einem Stahlprodukt und einem Aluminiumprodukt, wobei die Korrosionsunterdrückungsschicht allein auf die Verbindungsfläche eines der beiden aufeinander liegenden Bleche (Stahl/Aluminium) aufgebracht wird.

Aus der Veröffentlichung LYAKHOVICH L S ET AL: "Diffusion zinc-plating of aluminum alloys", METAL SCIENCE AND HEAT TREATMENT, Bd. 27, Nr. 6, Juni 1985 (1985-06), Seiten 468-471, Belorussian Polytechnic Institute [SU] sind unterschiedliche Zinkdiffusionsbehandlungen von Aluminium bekannt.

Ein weiterer Materialverbund, welcher hinsichtlich der Kontaktkorrosion problematisch ist, stellt eine Mischbauweise aus Stahl und Kupfer dar. Hier stellt die Cu-Legierung gegenüber dem Stahl den edleren Partner dar. Auch hier ist es erforderlich, die Kontaktstelle mit besonderen Maßnahmen vor der Bildung eines Lokalelements zu schützen.

Die bekannten Verfahren und Methoden zur Herstellung von Karosseriebauteilen bzw. eines Karosserierohbaus in Mischbauweise sind hinsichtlich der Anforderungen an einen zuverlässigen und kostengünstigen Korrosionsschutz gerade im Fügebereich nach wie vor unbefriedigend.

Aufgabe der Erfindung ist es somit ein Bauteil, insbesondere ein Karosseriebauteil für Kraftfahrzeuge, in Mischbauweise aus Stählen und Leichtmetalllegierung bereit zu stellen, das im Bereich der Fügestellen eine verbesserte Korrosionsbeständigkeit bietet, sowie ein Verfahren zur Bereitstellung geeigneter Nichteisenmetallbauteile für derartige Mischbauweisen aufzuzeigen.

Die Aufgabe wird erfindungsgemäß gelöst durch ein Verfahren mit den Merkmalen des Anspruchs 1 sowie durch ein Karosseriebauteil gemäß den Merkmalen des Anspruchs 5. Als Verfahren zur Herstellung von Zink-beschichteten Nichteisenmetall-Bauteilen, insbesondere für die Fertigung korrosionsgeschützter Karosserien in Mischbauweise wird ein Thermodiffusionsverfahren - im Folgenden auch Zinkdiffusions- oder Zinkthermodiffusionsverfahren genannt - gewählt. Dabei wird für das Zinkdiffusionsverfahren im Wesentlichen auf bereits bekannte Thermodiffusionsverfahren zur Zn-Beschichtung von Eisenmetallen bzw. Stählen zurückgegriffen. Diese basieren im Prinzip auf dem für Kleinteile und Schüttgut bekannten Sherardisierverfahren von Stahlwerkstoffen gemäß der DIN EN 13811. Beim Sherardisieren werden die Kleinteile im engen Kontakt mit Zinkstaub und einem inerten Füllmaterial, wie Sand, erhitzt, um eine Feststoffdiffusion des Zn in die Stahloberfläche einzuleiten. Durch das Sherardisieren entstehen auf den Bauteilen eine Beschichtung aus einer Zink-Eisenlegierung, bzw. unterschiedliche intermetallische Fe-Zn-Phasen. Als Eisen-Grundwerkstoff sind gemäß der DIN 13811 unter anderem unlegierte Kohlenstoffstähle oder schwach legierte Stähle geeignet.

Weitere prinzipiell geeignete Ausgestaltungen dieses Thermodiffusionsverfahrens für Stähle sind unter anderem aus der DE 103 48 086 A1, RU 2 174 159, DE 10 2004 035 049 B4 oder der UA 75728 für das Beschichten von Stahlsubstraten bekannt.

In der DE 103 48 086 A1 wird vorgeschlagen, ein warmgeformtes und gehärtetes Bauteil aus hochfestem Stahl mit einer Korrosionsschutzschicht aus einer Zink-Eisenlegierung zu versehen, die mittels eines Feststoffdiffusionsverfahrens aufgetragen ist. Hierbei handelt es sich um die Verwendung des an sich bekannten Sheradisierverfahrens in abgewandelter Form für wärmeeintragsempfindliche gehärtete Kraftfahrzeugbauteile.

Aus der RU-Patentschrift 2 174 159 ist ein Verfahren bekannt, bei dem das Stahl-Bauteil und ein Sättigungsgemisch, das 80 bis 90% Zink enthalt, in einem dicht abgeschlossenen Drehbehälter bei einer Temperatur von 360 bis 470°C unter ständiger Drehung behandelt wird.

Die DE 10 2004 035 049 B4 beschreibt ein Verfahren zur Zn-Beschichtung von Stahlerzeugnissen, insbesondere auch aus hochfesten Stählen und mit formschwierigen Profilen, mittels Wärmebehandlung in einem Container, in den das Bauteil gleichzeitig mit einem feindispersen Zinkpulver und einem wärmestabilisierenden Füllstoff in Form von Granalien oder Kügelchen eingebracht werden. Die Thermodiffusionsbeschichtung wird bei einer Temperatur von 260 bis 320°C durchgeführt.

In besonders bevorzugter Ausgestaltung der Erfindung werden als Nichteisenmetall eine Leichtmetalllegierung auf der Basis einer Ti-Legierung angewendet.

Überraschenderweise lassen sich die aufgeführten Verfahren für die Eisenmetallbeschichtung bzw. Stahlbeschichtung nach entsprechender Anpassung von Temperaturführung und Behandlungsintensität an das jeweilig zu beschichtende Metall auf der Basis von Ti-Legierung analog übertragen. Dabei kann hinsichtlich der Leichtmetalllegierungen auf die für Konstruktionsaufgaben üblichen Legierungen zurückgegriffen werden. Die Beschichtung auf die Nichteisenmetall-Bauteile erfolgt erfindungsgemäß durch eine Zn-Staub-Mischung bei einer Temperatur im Bereich von 300 bis 600°C unter Bildung einer Zinkdiffusionsschicht.

Es hat sich gezeigt, dass die erfindungsgemäß gewählten Nichteisenmetall-Legierungen gut geeignete Substrate für die Aufbringung von Zn-Beschichtungen in Form einer Zinkdiffusionsbeschichtung darstellen. Das Zn ist zur Ausbildung von gut haftenden Metalllegierungen bzw. Zwischenphasen geeignet. Hierdurch ist sicher gestellt, dass der Übergang zwischen dem Substratmetall und dem Zink der Beschichtung nicht abrupt, sondern über Zn/Metall-Zwischenphasen bzw. -Legierungen erfolgt.

Die Substratmaterialien zeichnen sich auch dadurch aus, dass durch die Zinkdiffusionsbeschichtung keine spröden Zn/Metall-Zwischenphasen ausgebildet werden. Dies ist für die Eignung als Karosseriebauteil von besonderer Wichtigkeit, da die beschichteten Bauteile in der weiteren Verarbeitung zum Teil erheblichen mechanischen Belastungen oder weiteren Umformungen unterliegen, die zum Abplatzen spröder Beschichtungen führen können.

Die erfindungsgemäss aufgebrachte Zn-Beschichtung bzw. die Bauteilrandschicht bildet mit dem Substrat somit eine (im Verhältnis zur Substrathärte) duktile und geschlossene Verbindung aus.

Hinsichtlich von Bauteilen aus Titan bzw. Titanlegierungen bietet das erfindungsgemäße Verfahren den besonderen Vorteil, dass auf das giftige, umweltschädliche Cadmium als Beschichtungsmaterial zum Schutz vor Korrosion bei Kontakt mit Stahllegierungen, durch die Zink-Thermodiffusionsbeschichtung ersetzt werden.

Insbesondere von kommerzieller Bedeutung ist die Anwendung des Zink-Thermodiffusionsverfahrens bei Aluminium bzw. Aluminiumlegierungen zu sehen. So kann insbesondere für die kupferhaltigen bzw. spannungsrissempfindlichen AI-Legierungen eine kostengünstige Alternative zum Plattieren mit Rein-Al oder bspw. AlZn1 geschaffen werden. Dies ist für Karosserien im Flugzeugbau von Bedeutung.

In einer bevorzugten Ausgestaltung der Erfindung wird vor der Zn- Beschichtung nach dem Zink-Thermodiffusionsverfahren die Metall-Oberfläche von Oxiden gereinigt. Dabei kann durch die Reinigungsbehandlung eine zusätzliche Aktivierung der Metalloberfläche stattfinden. Die Reinigung kann mechanisch oder chemisch erfolgen.

In weiterer Ausgestaltung der Erfindung erhalten die Zn-diffusionsbeschichteten Leichtmetallbauteile eine Phosphatierungsbeschichtung, wie sie als Korrosionsschutzbehandlung für Stähle üblich ist. An der Leichtmetall-, insbesondere Aluminium-Bauteiloberfläche ergeben sich nach der Phosphatierung für das anschließende Aufbringen organischer Deckschichte (Lacke, insbes. KTL-Beschichtungen) die gleichen Prozessparameter wie für andere zinkbeschichtete Bauteile. Das bedeutet, dass sich die Mischbauteile nach dem Fügen gemeinsam prozessieren lassen.

Ein weiterer Vorteil der Zinkdiffusionsbeschichtung ist die verbesserte Haftung der Oberfläche bei organischen Beschichtungen, Lacken, Klebern und dergleichen.

Die Zinkdiffusionsschicht bietet im Übrigen auch eine hervorragende Grundlage für das Strukturkleben, insbesondere für das Punktschweißkleben, Stanznietkleben oder Blindnietkleben. Die Zinkdiffusionsschicht bietet auch dort einen guten Kontaktschutz, wo Leichtmetall und Stahl ohne Kleber aufeinander stoßen.

In einer bevorzugten Variante ist das Leichtmetallbauteil blechförmig ausgebildet und wird nach der Beschichtung durch Tiefziehen weiter umgeformt. Die durch das erfindungsgemäß angewendete Beschichtungsverfahren gebildeten Zn-Schichten haften so fest und sind andererseits so duktil, dass sie selbst ein Tiefziehen unbeschadet überstehen können. Dies gilt insbesondere für Al-LeichtmetalIlegierungen.

Ebenso ist es möglich, die durch das Zn-Thermodiffusionsverfahren beschichteten Leichtmetallbauteile mittels Warmumformung weiter zu behandeln. Von besonderer Bedeutung ist dabei, dass die Warmumformung nicht unter Schutzgas, sondern an Luft durchgeführt werden kann. Es kann somit auf eine Ofen-Schutzgasatmosphäre verzichtet werden. Die Zn- Beschichtung schützt die hoch oxidationsempfindlichen Leichtmetalle vor Luftzutritt und Oxidation.

Ein weiterer Aspekt ist, dass die Zink-Thermodiffusionsbeschichtung einen für die Warmumformung geeigneten Schmierstoffersatz bildet. Der Einsatz von Schmierstoffen für die Umformwerkzeuge kann reduziert werden.

Die maximale Erwärmungstemperatur des Zn-beschichteten Leichtmetall-Blechhalbzeugs liegt zweckmäßigerweise immer unterhalb des Schmelzpunktes von Zink. Ein wesentlicher Vorteil der Warmumformung gegenüber dem konventionellen, kalten Tiefziehen ist die verbesserte Maßhaltigkeit der Bauteile. Erst durch die Zn-Thermodiffusionsbeschichtung ist das Warmumformen der Leichtmetalle kostengünstig durchführbar.

Ein weiterer Aspekt der Erfindung sind Karosseriebauteile, insbesondere für Kraftfahrzeuge, in Metall-Hybrid- oder Mischbauweise bei dem mindestens ein Leichtmetallbauteil und ein Stahlbauteil aneinandergefügt sind, wobei das Leichtmetallbauteil eine Zinkthermodiffusionsschicht (Zinkdiffusionsschicht) trägt, welche den unmittelbaren Kontakt zwischen Leichtmetall und Stahl an der Fügestelle unterbindet.

Für die Erfindung ist es dabei wesentlich, dass die Oberfläche des Leichtmetallbauteils durch eine Zinkdiffusionsschicht bedeckt ist. Somit erfolgt der Kontakt zum Stahlbauteil an den Fügestellen über die Zinkdiffusionsschicht und ein direkter Kontakt zwischen dem Leichtmetall und dem Stahl wird vermieden.

Hierdurch wird das elektrochemische Spannungsgefälle zwischen den unterschiedlichen Metalllegierungen gesenkt und die Korrosionsneigung des unedleren Partners erheblich verringert.

Von besonderer Bedeutung sind dabei die Fügebereiche, da die zu verbindenden Bauteile häufig überlappend aneinandergefügt werden, wobei sich zwischen den Bauteilen ein dünner Spalt ergibt. In der Karosserie ist dieser Spalt häufig elektrolythaltigem Wasser ausgesetzt, das die beiden Bauteile elektrisch leitend überbrückt. Die hierdurch entstehenden Lokalelemente führen zu äußerst schädlichen Korrosionserscheinungen.

Durch die üblichen Verfahren der Nahtabdichtung oder der KTL (kathodischen Tauchlackierung, oder katophoretische Tauchlackierung) wird der Spaltbereich häufig nicht zuverlässig beschichtet und verschlossen. Daher können in diesen Spalt dennoch Wasser (insbesondere Kondens- oder Spritzwasser) und andere elektrolythaltige Trägerflüssigkeiten eintreten, so dass es zu Kontaktkorrosion kommen kann. Durch die Zinkdiffusionsbeschichtung des Leichtmetallbauteils somit in vorteilhafter Wiese gerade die für den Fügespalt gefürchtete Korrosion wirksam verringert.

Das Karosseriebauteil ist in bevorzugter Ausführung zumindest im Bereich der Fügestelle durch einen Lack beschichtet. Dabei spielt insbesondere eine KTL- Beschichtung eine Rolle. Die Beschichtung kann auf die Zn-Schicht des Leichtmetallbauteils aufgetragen werden. Ebenso ist es möglich, zunächst einen Korrosionsschutzprimer, insbesondere eine Phosphatierungsschicht aufzutragen und erst hierauf die Lackschicht aufzutragen.

Bevorzugt wird als Stahlbauteil des Mischbauteils ein verzinkter Stahl eingesetzt. Der Stahl kann dabei die üblichen Zinkbeschichtungen tragen. Beispielsweise kann das Metallstrukturbauteil durch ein feuerverzinktes Bandblech gebildet werden, insbesondere als Bandverzinkung, bei dem Stahlblech kontinuierlich durch ein Bad ausgeschmolzenem Zinkgeführtwird. Auf beiden Seiten des Blechs bildet sich dabei eine den Stahl vor Korrosion schützende Zinkschicht.

Ebenso kann das Stahlbauteil vor dem Fügen mit dem Zn-beschichteten Leichtmetallbauteil bereits mit einem Korrosionsschutzprimer, gegebenenfalls auf einer Zn-Beschichtung, versehen sein. Als Verbindungstechnik sind auch hier gängige thermische und mechanische Fügeverfahren sowie Kleben anwendbar. Stahlband mit Korrosionsschutzprimer ist zum Schweißen mit den üblichen Schweißverfahren geeignet.

Besonders vorteilhaft an der Zn-Thermodiffusionsbeschichtung des Leichtmetallbauteils ist es, dass sich diese Schicht hinsichtlich später aufzubringender weiterer Beschichtungen und Lackierungen nahezu gleich verhält wie die Oberfläche eines verzinkten Stahlbauteils. Daher kann das Mischbauteil in gemeinsamen Oberflächenbehandelnden bzw. beschichtenden Prozessen weiterbehandelt werden. Insbesondere entfällt bei den Zn-Thermodiffusions-beschichteten (Al-)Leichtmetallbauteilen das sonst übliche Beizen zum Entfernen der Al-Oxidschicht und Aufbringen einer notwendigen Konversionsschicht für anschließende weitere Fertigungsprozessschritte, wie Kleben oder KTL-Beschichten. Die vorbeschichteten Halbzeuge lassen sich ähnlich wie verzinkte Stahlbleche verarbeiten - vom Tiefziehen, Fügen bis Lackieren.

Das Herstellen von Aluminium-Blechbauteilen mit vorbeschichteten Aluminium-Blechhalbzeugen wird auch mit Equipment, das grundlegend für Stahlbleche auslegt bzw. optimiert ist, vereinfacht bzw. ermöglicht.

An der Leichtmetallbauteiloberfläche ergeben sich bei einer Phosphatierung als Vorbehandlung für anschließende organische Deckschichten die gleichen Prozessparameter wie für andere zinkbeschichtete Bauteile. Die Zink- Thermodiffusionsschicht ist insbesondere auch leitfähig und somit schweißbar und einsetzbar für eine folgende KTL-Beschichtung.

Das Karosseriebauteil in Mischbauweise ist an den Fügestellen zwischen Leichtmetall und Stahl bzw. Eisenlegierung bei flächigen Leichtmetall- oder Stahlteilen, bzw. -blechen insbesondere durch Nietverbindungen ohne zusätzlicheVerklebunggefügt.

Die Karosseriebauteile können insbesondere für Kraftfahrzeuge, Schienenfahrzeuge und Luftfahrzeuge Verwendung finden.

## Patentansprüche

1. Verfahren zur Herstellung von Zink-beschichteten Bauteilen für die Fertigung korrosionsgeschützter Karosserien in Mischbauweise, bei dem mindestens ein Leichtmetallbauteil auf der Basis von Titan oder einer Ti-Legierung und ein Stahlbauteil aneinandergefügt sind, wobei die Beschichtung auf das Leichtmetallbauteil durch ein Zinkdiffusionsverfahren unter Anwendung einer Zn-Staub-Mischung bei einer Temperatur im Bereich von 300 bis 600°C unter Bildung einer Zinkdiffusionsschicht aufgebracht wird, und auf die Zn-Diffusionsschicht eine Phosphatierungsbeschichtung aufgebracht wird, das Stahlbauteil optional eine Zinkbeschichtung trägt, und das Leichtmetallbauteil mit dem Stahlbauteil zusammengefügt wird.

2. Verfahren nach Anspruch 1, **dadurch gekennzeichnet, dass** vor der Beschichtung ein Reinigen von Oxiden und Aktivieren der Oberfläche des Bauteilrohlings durchgeführt wird.

3. Verfahren nach einem der voran gegangenen Ansprüche, **dadurch gekennzeichnet, dass** das Leichtmetallbauteil blechförmig ausgebildet ist und nach der Beschichtung durch Tiefziehen weiter umgeformt wird.

4. Verfahren nach einem der Ansprüche 1 bis 2, **dadurch gekennzeichnet, dass** das Leichtmetallbauteil mittels Warmumformung an Luft weiterbehandelt wird.

5. Karosseriebauteil hergestellt nach einem der Ansprüche 1 bis 4, welche den unmittelbaren Kontakt zwischen Leichtmetall und Stahl an der Fügestelle unterbinden.

6. Karosseriebauteil nach Anspruch 5, **dadurch gekennzeichnet, dass** das Stahlbauteil verzinkt, insbesondere feuerverzinkt ist.

7. Karosseriebauteil nach Anspruch 5 oder 6, **dadurch gekennzeichnet, dass** das Karosseriebauteil zumindest im Bereich der Fügestelle eine unmittelbar auf die Metalloberflächen aufgetragene Lackbeschichtung trägt.

8. Karosseriebauteil nach Anspruch 7, **dadurch gekennzeichnet, dass** die Lackbeschichtung eine KTL-Beschichtung ist.

9. Karosseriebauteil nach einem der Ansprüche 5 bis 8, **dadurch gekennzeichnet, dass** das Leichtmetallbauteil und das Stahlbauteil aneinander geschweißt sind.

## Claims

1. Process for manufacturing zinc-coated components for the production of corrosion-protected bodies in mixed construction, in which at least one light metal component based on titanium or a Ti-alloy and a steel component are joined together, wherein the coating is applied to the light metal component by a zinc diffusion process using a Zn-dust mixture at a temperature in the range from 300 to 600°C forming a zinc diffusion layer, and a phosphating coating is applied to the Zn diffusion layer, the steel component optionally carries a zinc coating, and the light metal component is joined together with the steel component.

2. Process according to claim 1, **characterized in that** prior to the coating, a cleaning of oxides and activation of the surface of the component blank is carried out.

3. Process according to one of the preceding claims, **characterized in that** the light metal component is shaped in sheet metal form and is further reshaped by deep drawing after coating.

4. Process according to one of claims 1 to 2, **characterized in that** the light metal component is further treated by hot forming in air.

5. Body component manufactured according to one of claims 1 to 4, which prevent direct contact between light metal and steel at the joint.

6. Body component according to claim 5, **characterized in that** the steel component is galvanized, in particular hot-dip galvanized.

7. Body component according to claim 5 or 6, **characterized in that** the body component, at least in the region of the joint, carries a paint coating applied directly to the metal surfaces.

8. Body component according to claim 7, **characterized in that** the paint coating is a cathodic dip-paint coating.

9. Body component according to one of claims 5 to 8, **characterized in that** the light metal component and the steel component are welded to one another.

## Revendications

1. Procédé de fabrication de composants revêtus de zinc pour la réalisation de carrosseries protégées contre la corrosion en construction mixte, dans lequel au moins un composant en métal léger à base de titane ou d'un alliage de Ti et un composant en acier sont assemblés, le revêtement étant déposé sur le composant en métal léger par un procédé de diffusion de zinc moyennant l'emploi d'un mélange d'une poudre de Zn à une température dans la plage de 300 à 600 °C, avec la formation d'une couche de diffusion de zinc, et un revêtement de phosphatation est appliqué sur la couche de diffusion de zinc, le composant en acier portant éventuellement un revêtement de zinc, et le composant en métal léger étant assemblé avec le composant en acier.

2. Procédé selon la revendication 1, **caractérisé en ce qu'**un enlèvement d'oxydes et une activation de la surface de la pièce brute de composant sont effectués avant le revêtement.

3. Procédé selon l'une des revendications précédentes, **caractérisé en ce que** le composant en métal léger est conçu sous la forme d'une tôle et est transformé ultérieurement par un emboutissage profond après le revêtement.

4. Procédé selon l'une des revendications 1 à 2, **caractérisé en ce que** le composant en métal léger est traité ultérieurement au moyen d'un formage à chaud à l'air.

5. Composant de carrosserie fabriqué selon l'une des revendications 1 à 4, lequel empêche le contact immédiat entre le métal léger et l'acier au niveau du point de jonction.

6. Composant de carrosserie selon la revendication 5, **caractérisé en ce que** le composant en acier est zingué, notamment galvanisé à chaud.

7. Composant de carrosserie selon la revendication 5 ou la revendication 6, **caractérisé en ce que** le composant de carrosserie porte un revêtement de laque appliqué sur les surfaces métalliques dans la région du point de jonction.

8. Composant de carrosserie selon la revendication 7, **caractérisé en ce que** le revêtement de laque est un revêtement par cataphorèse.

9. Composant de carrosserie selon l'une des revendications 5 à 8, **caractérisé en ce que** le composant en métal léger et le composant en acier sont soudés ensemble.
